# EUROPEAN PATENT SPECIFICATION

(11) **EP 3 448 144 B1**
(45) Date of publication and mention of the grant of the patent: **19.02.2020**
(21) Application number: 17717215.2
(22) Date of filing: 29.03.2017
(51) Int. Cl.: A01F 12/60, A01D 41/12, A01D 41/127

(54) **A COMBINE HARVESTER HAVING A GRAIN BIN**
MÄHDRESCHER MIT EINEM KORNBEHÄLTER
MOISSONNEUSE-BATTEUSE POURVUE D'UNE CELLULE À GRAIN

(30) Priority: 26.04.2016 US 201662327502 P
(43) Date of publication of application: 06.03.2019
(73) Proprietor: AGCO Corporation, Duluth, GA 30096 (US)
(72) Inventor: DUCROQUET, Frederic, 36042 Breganze (IT)
(74) Representative: AGCO Intellectual Property Department
(86) International application number: PCT/IB2017/000328
(87) International publication number: WO 2017/187249

(56) References cited:
- WO-A1-2014/146152
- US-A- 5 480 354
- US-A1- 2012 237 325

## Description

### Field of the Invention

The present invention relates to a combine harvester comprising a grain bin having a volume monitoring system.

### Background of the Invention

Grain bins are used to hold harvested grain, and are often provided in combination with an agricultural combine, to retain newly-harvested grain after initial harvesting and during transport to a dedicated storage facility. An example of such a grain bin is provided in US 4,106,649. WO 2014/146152 is another example.

When harvesting and transporting grain, an operator needs to be aware of the volume fill level of a grain bin, to prevent grain spillage. It is known to provide simple level sensors around the periphery of a grain bin, such that a warning can be generated when the level of the contained grain approaches the top level of the grain bin. An operator can then take action to prevent over-filling of the grain bin.

However, such level sensor systems only detect the height of the grain at the sides of the grain bin, and do not provide any indication of the total volume of the contained grain, e.g. if the middle of the accumulated grain is formed in a peak. As a result, an operator must take additional care to visually monitor for the shape profile of the grain level in the bin, to ensure that the volume of accumulated grain does not present increased risk of spillage when traversing an incline, or at relatively high speed over uneven terrain.

It is an object of the invention to provide an improved grain volume sensing system, to address the above problems.

### Summary of the Invention

Accordingly, there is provided a combine harvester comprising a grain bin comprising walls defining a grain storage space, the grain bin further comprising a grain volume monitoring system having:
at least one image capture device positioned on said grain bin, the at least one image capture device arranged to capture at least one image of a grain pile contained in the grain storage space; and
a controller coupled to said at least one image capture device to receive said captured image, characterised in that the controller is arranged to determine an angle of repose of the grain pile and the height of the grain pile, based on the captured image, and
wherein the controller calculates the volume of the contained grain pile based on the angle of repose and the height of the grain pile.

Through the use of at least one captured image of a grain pile contained in a grain bin, a controller can perform image processing of the captured data to derive the shape profile of the contained grain. Having knowledge of the dimensions and structure of the grain bin itself, the volume of grain within the grain bin can then be calculated. This allows for a dynamic system for the monitoring of the harvested grain levels, and can provide for indications of remaining grain capacity of the grain bin, as well as grain volumes or shape profiles which may present increased risk of spillage. Preferably, the system comprises first and second image capture devices arranged to capture different images of the grain pile.

Preferably, the grain volume monitoring system comprises:
a first image capture device provided on a first side of the grain bin, the first image capture device arranged to capture an image of a grain pile contained in the grain bin from said first side of the grain bin, and
a second image capture device provided on a second side of the grain bin, opposite the first side, the second image capture device arranged to capture an image of a grain pile contained in the grain bin from said second side of the grain bin.

The use of two image capture devices located at opposite sides of the contained grain pile allows for an accurate calculation of the grain pile volume, as the distribution of grain in the grain bin may be uneven across the width of the contained grain pile. As a result, by capturing images on either side of any peak of the contained grain pile, an accurate shape profile of the contained grain pile can be derived.

Preferably, the grain volume monitoring system further comprises:
third and fourth image capture devices on the grain bin arranged to capture different images of a grain pile contained in the grain bin,
wherein the first and second image capture devices are arranged along a first plane, and wherein the third and fourth image capture devices are arranged along a second plane, different to said first plane. Preferably, the second plane is transverse to said first plane.

An increase in the number of image capture devices used will result in a corresponding increase in the accurate profiling of the shape of the contained grain pile. Accordingly, the calculation of grain volume can be performed with increased accuracy. Positioning the various image capture devices at cardinal points about the contained grain pile will ensure an even coverage of all aspects of the contained grain pile, with a 360 degree image profile.

Additionally or alternatively, the system comprises:
at least first and second image capture devices, wherein the first image capture device has a wider capture angle relative to the second image capture device.

Providing different capture angles for the image capture devices allows for an increase in capture accuracy. Different image capture devices can be directed to capture different aspects of the grain pile, e.g. a relatively narrow capture angle may be used to focus on the height of the contained grain pile against one of the walls of the grain bin, while a relatively wide capture angle may be used to capture the general profile of the grain pile, including the peak height of the grain pile. In addition, depending on the dimensions of the grain bin, wide capture angle devices may be required at certain locations to accurately record the entire visible profile of the contained grain.

Preferably, the image capture devices are arranged adjacent to an upper rim of the grain bin. Preferably, the image capture devices are arranged on the walls of the grain bin. Alternatively, the image capture devices are provided on brackets projecting from walls of the grain bin

The image capture devices may further be provided on grain bin extension panels, arranged at the upper end of a grain bin.

The image capture devices may comprise a video camera or still image camera. The image capture devices may also comprise a 3D camera.

Preferably, the controller is arranged to compare the calculated volume of grain to a pre-set volume limit, and to generate a warning signal if the calculated volume exceeds the pre-set volume limit.

The pre-set volume limit can comprise a threshold volume, above which there is an increased risk of grain spillage. The pre-set volume limit may be based on a number of different factors, which may comprise one or more of the following: the type of crop, the speed at which the grain bin is travelling or expected to travel, the field contour in which the grain bin is operating.

Preferably, the controller is arranged to communicate the calculated volume data to an operator. Preferably, the controller is coupled with a display terminal, wherein the calculated volume data is displayed on the display terminal.

Preferably, the combine comprises a drive control device having a force feedback module, wherein the force feedback module of the drive control device is controlled based on the calculated volume data.

Through use of an appropriate force feedback control of the combine, the controller can increase the force required to accelerate or decelerate the combine, based on the calculated volume data. This can be useful in case the volume is such that sudden acceleration or decelerations may result in grain spillage.

There is further provided a grain volume monitoring system as described above, for installation on a grain bin or on a combine harvester having a grain bin.

The sensor system may be provided as a kit of parts, for installation or retrofitting on a new or existing combine harvester or grain bin.

### Detailed Description of the Invention

Embodiments of the invention will now be described, by way of example only, with reference to the accompanying drawings, in which:
Fig. 1 is an illustration of a combine harvester having a grain bin with a grain volume monitoring system according to the invention;
Fig. 2 is a cross-sectional illustrative view of a grain bin with a grain volume monitoring system according to a first embodiment of the invention;
Fig. 3 is a top plan view of the grain bin of Fig. 2;
Fig. 4 is a process diagram for the operation of the grain volume monitoring system of the invention;
Fig. 5 is a cross-sectional illustrative view of a grain bin with a grain volume monitoring system according to a second embodiment of the invention;
Fig. 6 is a top plan view of the grain bin of Fig. 4;
Fig. 7 is a cross-sectional illustrative view of a grain bin with a grain volume monitoring system according to a third embodiment of the invention; and
Fig. 8 is an illustrative view of the variables determined by the grain volume monitoring system of the invention.

It will be understood that the drawings are provided as illustrative examples, and are not provided to scale.

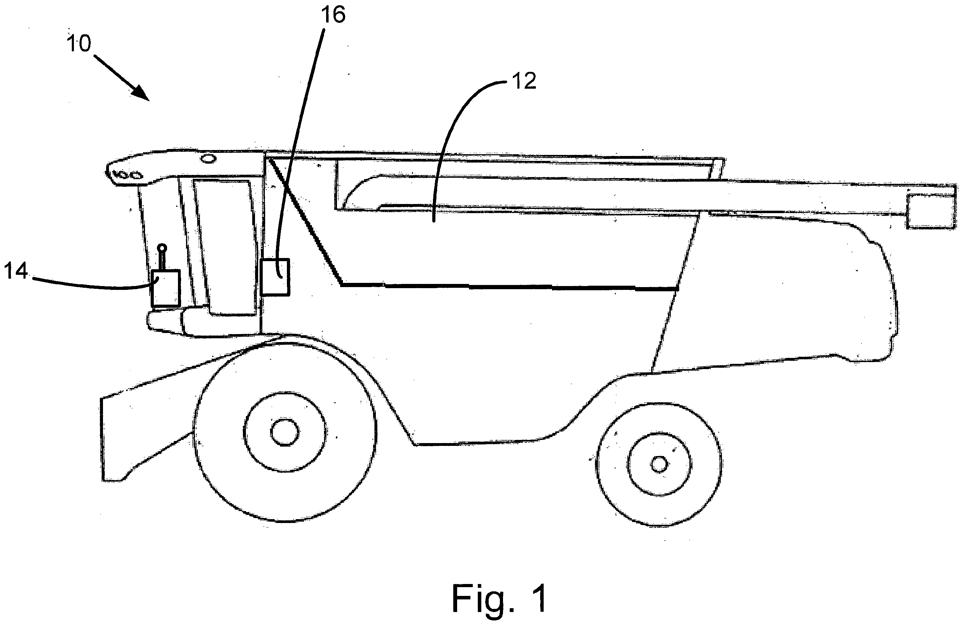

With reference to Fig. 1, a combine harvester is indicated at 10. The combine harvester 10 is provided with an integrated grain bin 12, which is used for the storage of harvested grain. The combine 10 comprises a driver station 14 which is used to control the operation of the combine 10. It will be understood that the driver station 14 comprises various input devices, e.g. steering wheels, acceleration and brake pedals, ground drive joysticks, etc., which may be used to control the combine systems and drive. In addition, the driver station 14 comprises information display devices, e.g. instrument dials, display terminals, touchscreen panels, etc., for the display and manipulation of data relating to combine operation.

The system of the invention comprises a controller 16 as part of a grain volume monitoring system, which is arranged to communicate with the driver station 14. It will be understood that the controller 16 may be a stand-alone device, specific to the grain volume monitoring system, or the controller 16 may be provided as a processor routine which is performed by a general-purpose electronic control unit (ECU) of the combine 10.

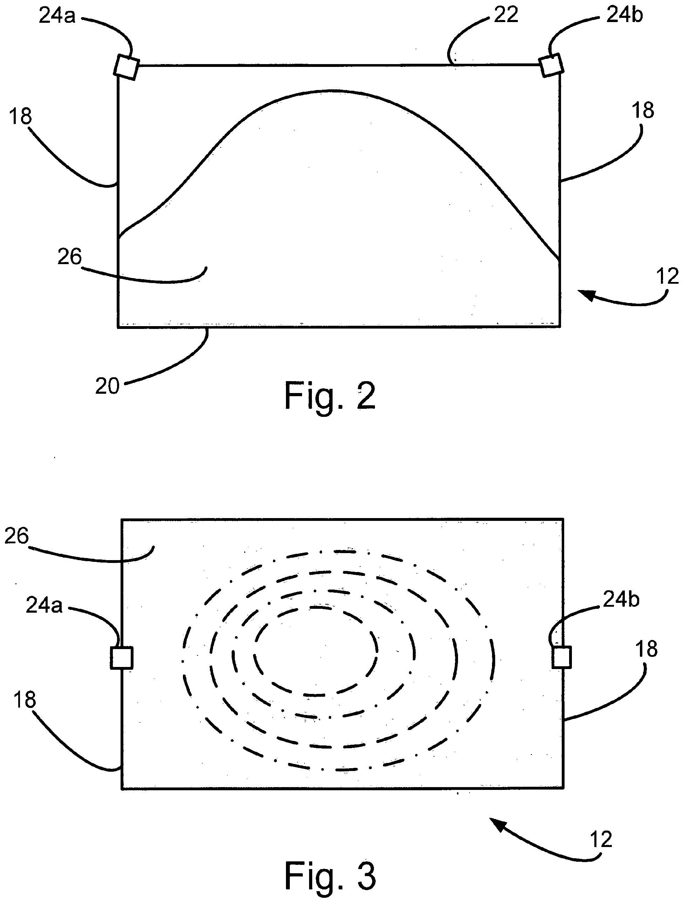

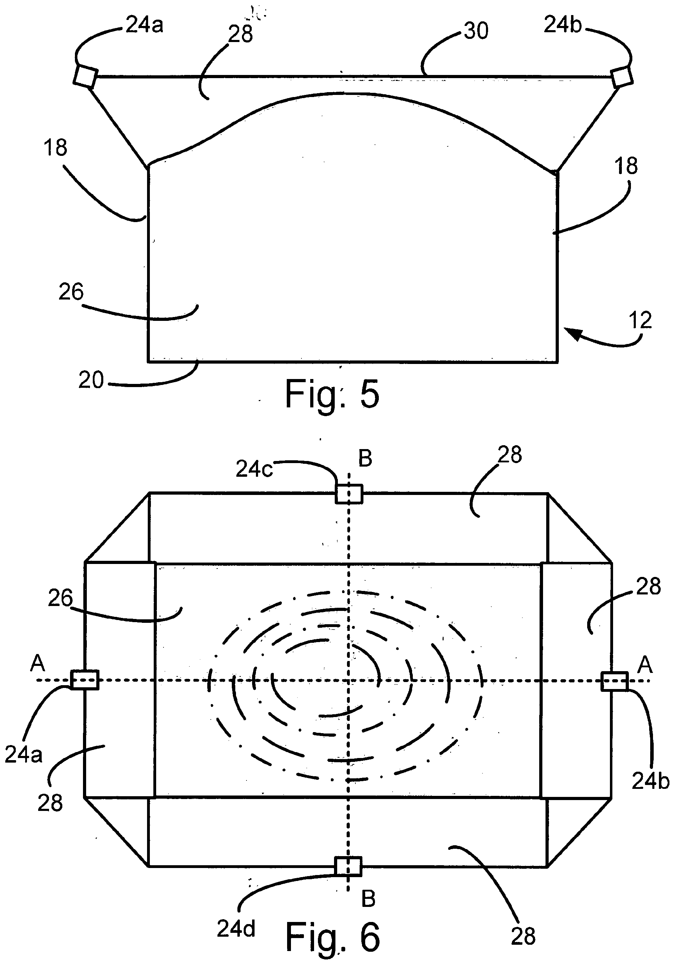

In Figs. 2 and 3, an illustration is provided of an embodiment of grain bin 12 according to the invention. The grain bin 12 is defined by side walls 18 which extend from a bottom wall 20 towards an open end 22. The open end 22 of the grain bin 12 may be provided with adjustable doors or extension panels (shown in the embodiments of Fig. 5 and 6), which may be opened to provide access to the interior of the grain bin 12 or to provide for extended capacity of the bin 12.

A pair of image capture devices in the form of first and second cameras 24a,24b are provided on the grain bin 12, the cameras 24a,24b forming part of the grain volume monitoring system. The cameras 24a,24b are mounted on opposed side walls 18 of the grain bin 12, at the open end 22 of the grain bin 12. The cameras 24a,24b are directed towards the interior of the grain bin 12, to monitor the level of grain contained within the grain bin 12, indicated at 26. The images captured by the cameras 24a,24b are provided to the controller 16 for further image processing. While the illustrated embodiment uses two separate cameras 24a,24b, it will be understood that a single image capture device or camera may be used in alternative embodiments, where such a single camera is positioned to provide an overview of the entire grain pile for the purpose of determining the contained volume of grain.

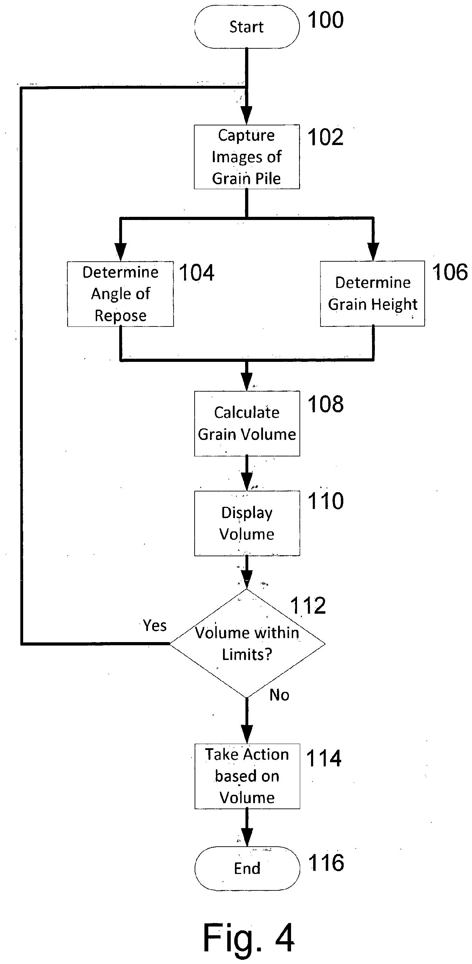

With reference to Fig. 4, an outline of the process used by the grain volume monitoring system of the invention is now described, starting at step 100.

The cameras 24a,24b are controlled to capture images of the contained grain pile 26, step 102. The captured images are communicated to the controller 16, which analyses the images to determine the angle of repose of the grain pile, step 104, and the height of at least a portion of the grain pile, step 106. The height of the grain pile 26 may be the peak height of the grain pile, and/or the height of the grain pile adjacent the side walls 18 of the grain bin 12. The controller 16 is configured to perform image recognition techniques in order to determine the characteristics of the grain pile. In some embodiments, the controller 16 is arranged to stitch together a series of captured images, to provide a geometrical profile of the level of grain in the bin 12.

Using the determined data of the shape of the contained grain 26, the controller 16 is arranged to determine the volume of grain contained in the bin 12, using geometrical calculations and based on prior knowledge of the dimensions of the grain bin 12 itself, step 108. Once the volume is calculated, the controller 16 is configured to display the calculated volume to an operator, for example using a display terminal provided at the operator station 14, step 110.

In a further aspect of the invention, the controller 16 is arranged to compare the calculated volume of grain with at least one pre-set volume limit, step 112. The pre-set volume limit may comprise a threshold grain volume, above which there is an increased risk of grain spillage from the grain bin 12. The pre-set volume limit may be based on a number of different factors, which may comprise one or more of the following: the type of crop, the capacity of the grain bin, the speed at which the grain bin is travelling or expected to travel, the field contour or terrain profile for the area in which the grain bin is operating.

If the grain volume is within the defined limits, the controller 16 continues to monitor the grain volume in the bin 12. If the grain volume exceeds a pre-set limit, the controller 16 is arranged to perform an action in response to the high grain level, step 114. The action may comprise simply displaying a warning notification to an operator, e.g. via a display terminal provided at the operator station 14. In particular, if the volume of the contained grain is relatively high, the system can be configured to provide a warning to the combine operator that the contained grain may be in danger of spillage, in the event of driving over an inclined surface, driving at a relatively high speed, and/or sudden braking. When such a warning is issued, the operator may be prompted to take precautionary measures, e.g. ceasing further filling of the grain bin, reducing speed, changing route to avoid excessive inclines, smoothing the contained grain level to reduce the angle of repose of the grain, etc.

In a further aspect, the action may comprise an adjustment of the drive control of the combine 10. For example, the controller 16 may activate a speed limiter to restrict the maximum speed of the combine 10. Alternatively, if the combine 10 comprises a drive control device at the operator station 14 having a force feedback module, the controller 16 may adjust the force feedback response of the control device based on the calculated volume data. Such adjustment may comprise increasing the force required by the drive control device to accelerate or decelerate the combine 10, based on the calculated volume data. As a result, sudden acceleration or decelerations, which may result in grain spillage, are prevented.

In a further option, the controller 16 may be provided with information relating to a predicted route of the combine 10, in particular relating to predicted slopes to be traversed and/or expected speeds of the combine 10. In this instance, the controller can determine if the predicted route may result in grain spillage, based on the calculated grain volume level. If the risk of grain spillage exceeds a threshold, the controller can display a warning to the operator, either to adjust the predicted route, or to take further actions to prevent spillage.

Dependent on the calculated volume data, the volume monitoring method may continue to capture images of the grain pile for further analysis, step 102, or the method may be ceased, step 116. Providing a grain volume monitoring system utilising cameras allows for an efficient and dynamic system for the calculation of harvested grain volumes.

Preferably, the cameras 24a,24b comprise still image cameras, but video cameras may also be used. In addition, 3D image cameras may be provided, to generate a more accurate profile of the contained grain. The cameras 24a,24b are preferably provided within an insulating housing, e.g. formed of plastics or rubber, to reduce the risk of current arcing when passing under overhead power lines.

Further embodiments of the invention are illustrated in Figs. 5-7. Features common to the various embodiments are provided with the same reference numerals.

In Figs. 5 and 6, the grain bin 12 is provided with additional grain bin extension panels 28, to provide for increased capacity of the grain bin 12. The panels 28 are arranged at the open end 22 of the bin 12, at the upper end of the side walls 18. The panels 28 act to define a new open end 30, and may be hingedly connected to the side walls 18 to allow for different dimensions of the open end 30.

In the embodiment of Figs. 5 and 6, the image capture devices 24a,24b are provided at the upper end of the panels 28, at opposite sides of the new open end 30 of the bin 12.

In a further enhancement, Fig. 6 shows that the embodiment of grain volume monitoring system comprises additional image capture devices in the form of third and fourth cameras 24c,24d, which are provided at opposite sides of the open end 30 of the bin 12. As can be seen from the embodiment of Fig. 6, the first and second cameras 24a,24b are arranged along a first plane A, while the third and fourth cameras 24c,24d are arranged along a second plane B, which is orthogonal or transverse to the first plane A. By arranging the cameras 24a,24b,24c,24d at the cardinal points around the interior of the grain bin 12, an accurate profile of a contained grain pile 26 can be monitored, accounting for all variations in the shape profile of the grain pile 26 to be captured by the cameras. It will be understood that any number of cameras may be used to provide an accurate profile of the shape of the contained grain pile 26.

In a further aspect of the invention, image capture devices may be used having different capture angles. For example, a first camera may be used having a wider capture angle relative to a second camera. Providing different capture angles for the image capture devices allows for an increase in capture accuracy. Different image capture devices can be directed to capture different aspects of the grain pile, e.g. a relatively narrow capture angle may be used to focus on the height of the contained grain pile against one of the walls of the grain bin, while a relatively wide capture angle may be used to capture the general profile of the grain pile, including the peak height of the grain pile. In addition, depending on the dimensions of the grain bin, wide capture angle devices may be required at certain locations to accurately record the entire visible profile of the contained grain.

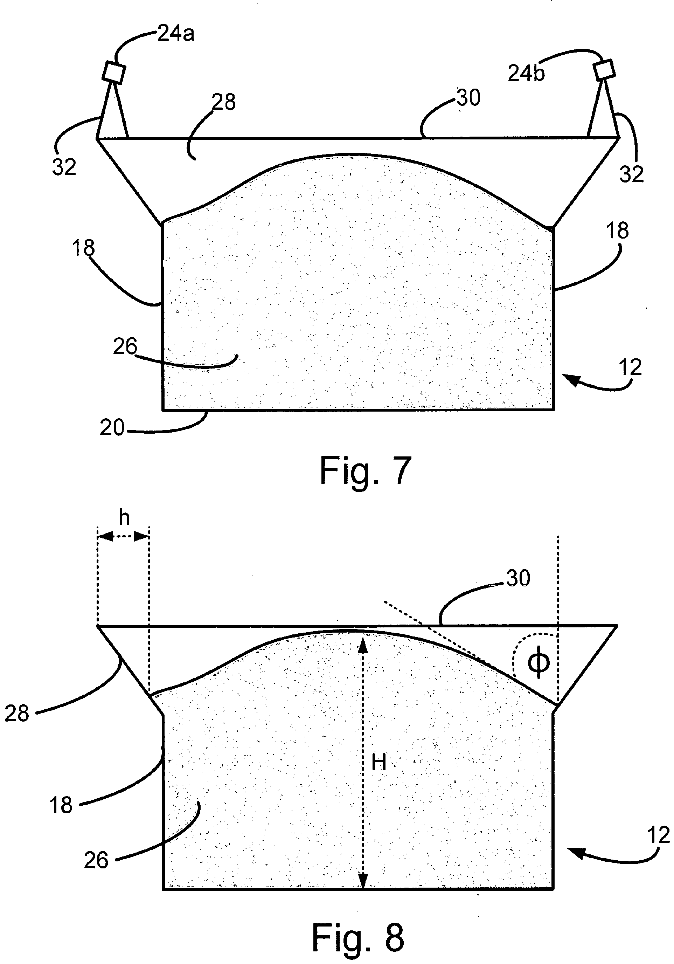

In Fig. 7, a further embodiment of the grain volume monitoring system is illustrated, wherein the cameras 24a,24b are provided on brackets 32 extending from the upper end of the grain bin extension panels 28. The use of such brackets allows for a better overall viewing angle of the contained grain pile 26 by the cameras 24a,24b. It will be understood that the brackets 32 may be hingedly or pivotally mounted to the panels 28 or alternatively to the side walls 18 of the grain bin 12, such that the cameras can be easily adjusted into a position to provide the best view of the contained grain pile 26. In addition, it will be understood that the brackets 32 are preferably provided from an insulating or nonconductive material, to reduce the risk of current arcing when passing under overhead power lines.

With reference to Fig. 8, it will be understood that the image capture devices of the invention are used to record a number of different variables of a contained grain pile 26. In one aspect, the angle of repose of the grain pile is measured as the angle φ formed by the surface of the accumulated grain pile 26. In the event of uneven filling of the grain bin 12, the angle of repose may vary about the grain pile, wherein the system is arranged to record such variations in angle. The absolute peak height H of the grain pile 26 may be measured by the system. Additionally or alternatively, the height of the grain pile is measured against the side walls 18 or the extension panels 28, to determine the distance h between the top of the grain pile and the upper end of the grain pin 12. Based on this data, and on pre-existing knowledge of the overall dimensions of the grain bin 12 and the type of grain being harvested, the controller 16 is arranged to calculate the volume of grain contained in the grain bin 12.

Is some embodiments, it will be understood that the grain bin 12 may be provided with additional load cells to provide a measurement of the weight of the grain bin plus the contained grain. Such a weight measurement may be used as a comparison to the calculated volume of the contained grain, as a confirmation of the accuracy of the calculations used.

It will be understood that the grain volume monitoring system may be provided as a kit of parts for installation on or retrofitting to an existing grain bin or combine harvester.

It will be understood that the invention may be used for level detection of other particulate material, and is not limited to use for measuring the volume of harvested grain.

The invention is not limited to the embodiments described herein, and may be modified or adapted without departing from the scope of the present invention.

## Claims

1. A combine harvester (10) comprising a grain bin (12) comprising walls (18) defining a grain storage space, the grain bin further comprising a grain volume monitoring system having:
at least one image capture device (24a, 24b, 24c, 24d) positioned on said grain bin, the at least one image capture device arranged to capture an image (102) of a grain pile (26) contained in the grain storage space; and
a controller (16) coupled to said at least one image capture device to receive said captured image,
**characterised in that**
the controller is arranged to determine an angle of repose (φ) of the grain pile and the height (H) of the grain pile, based on the captured image, and
wherein the controller calculates the volume of the contained grain pile based on the angle of repose and the height of the grain pile.

2. The combine harvester of claim 1, wherein the grain volume monitoring system comprises:
a first image capture device (24a) provided on a first side of the grain bin, the first image capture device arranged to capture an image of a grain pile contained in the grain bin from said first side of the grain bin, and
a second image capture device (24b) provided on a second side of the grain bin, opposite the first side, the second image capture device arranged to capture an image of a grain pile contained in the grain bin from said second side of the grain bin.

3. The combine harvester of claim 2, wherein the grain volume monitoring system further comprises:
third (24c) and fourth image (24d) capture devices on the grain bin arranged to capture different images of a grain pile contained in the grain bin,
wherein the first and second image capture devices are arranged along a first plane, and wherein the third and fourth image capture devices are arranged along a second plane, different to said first plane.

4. The combine harvester of claim 3, wherein the second plane is transverse to said first plane.

5. The combine harvester of any one of claims 1-4, wherein the grain volume monitoring system comprises:
at least first and second image capture devices, wherein the first image capture device has a wider capture angle relative to the second image capture device.

6. The combine harvester of any one of claims 1-5, wherein the at least one image capture device is arranged adjacent to an upper rim of the grain bin.

7. The combine harvester of any one of claims 1-6, wherein the at least one image capture device is provided on at least one bracket (32) projecting from the grain bin

8. The combine harvester of any one of claims 1-7, wherein the at least one image capture device is provided on a grain bin extension panel (28), arranged at the upper end of a grain bin.

9. The combine harvester of any one of claims 1-8, wherein the at least one image capture device comprises at least one of the following: a video camera, a still image camera, a 3D camera.

10. The combine harvester of any one of claims 1-9, wherein the controller is arranged to compare the calculated volume of grain to a pre-set volume limit, and to generate a warning signal if the calculated volume exceeds the pre-set volume limit.

11. The combine harvester of any one of claims 1-10, wherein the controller is arranged to communicate the calculated volume data to an operator, preferably wherein the calculated volume data is displayed on a display terminal.

12. The combine harvester of any one of claims 1-11, wherein the combine comprises a drive control device (14) having a force feedback module, wherein the force feedback module of the drive control device is controlled based on the calculated volume data.

13. A grain volume monitoring system provided as a kit for installation on a combine harvester having a grain bin, comprising:
an image capture device for capturing an image of a grain pile in the grain bin, and;
a controller for coupling to the image capture device to receive said captured image,
**characterised in that**
the controller is arranged to determine an angle of repose and the height of the grain pile based on the captured image and to calculate the volume of the grain pile based on the angle of repose and the height of the grain pile.

## Patentansprüche

1. Mähdrescher (10) mit einem Kornbehälter (12) mit Wandungen (18), die einen Kornspeicherraum definieren, wobei der Kornbehälter weiterhin ein Kornvolumenüberwachungssystem mit dem Folgenden aufweist:
mindestens eine Bilderfassungsvorrichtung (24a, 24b, 24c, 24d), die an dem Kornbehälter positioniert ist, wobei die mindestens eine Bilderfassungsvorrichtung zum Erfassen eines Bilds (102) eines in dem Kornspeicherraum aufgenommenen Kornhaufens (46) angeordnet ist; und
einen mit der mindestens einen Bilderfassungsvorrichtung verbundenen Regler (16) zum Empfangen des erfassten Bilds, **dadurch gekennzeichnet, dass**
der Regler zum Bestimmen eines Schüttwinkels (Φ) des Kornhaufens und der Höhe (H) des Kornhaufens basierend auf dem erfassten Bild angeordnet ist, und
wobei der Regler das Volumen des aufgenommenen Kornhaufens basierend auf dem Schüttwinkel und der Höhe des Kornhaufens berechnet.

2. Mähdrescher nach Anspruch 1, wobei das Kornvolumenüberwachungssystem das Folgende aufweist:
eine erste Bilderfassungsvorrichtung (24a), die an einer ersten Seite des Kornbehälters vorgesehen ist, wobei die erste Bilderfassungsvorrichtung zum Erfassen eines Bilds eines in dem Kornbehälter aufgenommenen Kornhaufens von der ersten Seite des Kornbehälters angeordnet ist, und
eine zweite Bilderfassungsvorrichtung (24b), die an einer zweiten Seite des Kornbehälters gegenüberliegend zu der ersten Seite vorgesehen ist, wobei die zweite Bilderfassungsvorrichtung zum Erfassen eines Bilds eines in dem Kornbehälter aufgenommenen Kornhaufens von der zweiten Seite des Kornbehälters angeordnet ist.

3. Mähdrescher nach Anspruch 2, wobei das Kornvolumenüberwachungssystem weiterhin das Folgende aufweist:
eine dritte Bilderfassungsvorrichtung (24c) und eine vierte Bilderfassungsvorrichtung (24d) an dem Kornbehälter, die zum Erfassen unterschiedlicher Bilder eines in dem Kornbehälter aufgenommenen Kornhaufens angeordnet sind,
wobei die erste Bilderfassungsvorrichtung und die zweite Bilderfassungsvorrichtung entlang einer ersten Ebene angeordnet sind, und wobei die dritte Bilderfassungsvorrichtung und die vierte Bilderfassungsvorrichtung entlang einer sich von der ersten Ebene unterscheidenden zweiten Ebene angeordnet sind.

4. Mähdrescher nach Anspruch 3, wobei die zweite Ebene quer zu der ersten Ebene verläuft.

5. Mähdrescher nach mindestens einem der Ansprüche 1-4, wobei das Kornvolumenüberwachungssystem das Folgende aufweist:
mindestens eine erste Bilderfassungsvorrichtung und eine zweite Bilderfassungsvorrichtung, wobei die erste Bilderfassungsvorrichtung einen breiteren Erfassungswinkel als die zweite Bilderfassungsvorrichtung besitzt.

6. Mähdrescher nach mindestens einem der Ansprüche 1-5, wobei die mindestens eine Bilderfassungsvorrichtung benachbart zu einem oberen Rand des Kornbehälter angeordnet ist.

7. Mähdrescher nach mindestens einem der Ansprüche 1-6, wobei die mindestens eine Bilderfassungsvorrichtung an mindestens einem von dem Kornbehälter hervorstehenden Halter (32) angeordnet ist.

8. Mähdrescher nach mindestens einem der Ansprüche 1-7, wobei die mindestens eine Bilderfassungsvorrichtung an einem an dem oberen Ende des Kornbehälters angeordneten Kornbehältererweiterungspaneel (28) vorgesehen ist.

9. Mähdrescher nach mindestens einem der Ansprüche 1-8, wobei die mindestens eine Bilderfassungsvorrichtung mindestens eins der folgenden Dinge aufweist: eine Videokamera, eine Fotokamera, eine 3-D-Kamera.

10. Mähdrescher nach mindestens einem der Ansprüche 1-9, wobei der Regler zum Vergleichen des berechneten Volumens des Korns mit einem vorgegebenen Volumengrenzwert und zum Erzeugen eines Warnsignals angeordnet ist, wenn das berechnete Volumen den vorgegebenen Volumengrenzwert überschreitet.

11. Mähdrescher nach mindestens einem der Ansprüche 1-10, wobei der Regler zum Übermitteln der berechneten Volumendaten an einen Bediener angeordnet ist, wobei vorzugsweise die berechneten Volumendaten auf einem Anzeigegerät wiedergegeben werden.

12. Mähdrescher nach mindestens einem der Ansprüche 1-11, wobei der Mähdrescher eine Antriebsregelvorrichtung (14) mit einem Kraftrückmeldungsmodul aufweist, wobei das Kraftrückmeldungsmodul der Antriebsregelvorrichtung basierend auf den berechneten Volumendaten geregelt ist.

13. Kornvolumenüberwachungssystem, das als Ausrüstung für die Installation an einem Mähdrescher mit einem Kornbehälter vorgesehen ist, mit dem Folgenden:
einer Bilderfassungsvorrichtung zum Erfassen eines Bilds eines Kornhaufens in dem Kornbehälter; und
einem Regler für eine Verbindung mit der Bilderfassungsvorrichtung zum Empfangen des erfassten Bilds, **dadurch gekennzeichnet, dass**
der Regler zum Bestimmen eines Schüttwinkels und der Höhe des Kornhaufens basierend auf dem erfassten Bild und zum Berechnen des Volumens des Kornhaufens basierend auf dem Schüttwinkel und der Höhe des Kornhaufens angeordnet ist.

## Revendications

1. Moissonneuse-batteuse (10) comprenant un compartiment à grain (12) comprenant des parois (18) définissant un espace de stockage de grain, le compartiment à grain comprenant, en outre, un dispositif de contrôle de volume de grain comportant :
au moins un dispositif de capture d'image (24a, 24b, 24c, 24d) positionné sur ledit compartiment à grain, le au moins un dispositif de capture d'image étant agencé afin de capturer une image (102) d'un tas de grain (26) contenu dans l'espace de stockage de grain ; et
un contrôleur (16) couplé audit au moins un dispositif de capture d'image afin de recevoir ladite image capturée,
**caractérisée en ce que**
le contrôleur est agencé afin de déterminer un angle de repos (Φ) du tas de grain et la hauteur (H) du tas de grain, sur la base de l'image capturée, et
dans laquelle le contrôleur calcule le volume du tas de grain contenu, sur la base de l'angle de repos et de la hauteur du tas de grain.

2. Moissonneuse-batteuse selon la revendication 1, dans laquelle le dispositif de contrôle de volume de grain comprend :
un premier dispositif de capture d'image (24a) agencé sur un premier côté du compartiment à grain, le premier dispositif de capture d'image étant agencé afin de capturer une image d'un tas de grain contenu dans le compartiment à grain à partir dudit premier côté du compartiment à grain, et
un deuxième dispositif de capture d'image (24b) agencé sur un second côté du compartiment à grain, opposé au premier côté, le deuxième dispositif de capture d'image étant agencé afin de capturer une image d'un tas de grain contenu dans le compartiment à grain à partir dudit second côté du compartiment à grain.

3. Moissonneuse-batteuse selon la revendication 2, dans laquelle le dispositif de contrôle de volume de grain comprend, en outre :
des troisième (24c) et quatrième (24d) dispositifs de capture d'image sur le compartiment à grain agencés afin de capturer différentes images d'un tas de grain contenu dans le compartiment à grain,
dans laquelle les premier et deuxième dispositifs de capture d'image sont agencés le long d'un premier plan, et dans laquelle les troisième et quatrièmes dispositifs de capture d'image sont agencés le long d'un second plan, différent dudit premier plan.

4. Moissonneuse-batteuse selon la revendication 3, dans laquelle le second plan est transversal par rapport audit premier plan.

5. Moissonneuse-batteuse selon l'une quelconque des revendications 1 à 4, dans laquelle le dispositif de contrôle de volume de grain comprend :
au moins des premier et deuxième dispositifs de capture d'image, dans laquelle le premier dispositif de capture d'image présente un angle de capture supérieur à celui du deuxième dispositif de capture d'image.

6. Moissonneuse-batteuse selon l'une quelconque des revendications 1 à 5, dans laquelle le au moins un dispositif de capture d'image est agencé de manière adjacente à un rebord supérieur du compartiment à grain.

7. Moissonneuse-batteuse selon l'une quelconque des revendications 1 à 6, dans laquelle le au moins un dispositif de capture d'image est agencé sur au moins un support (32) s'étendant à partir du compartiment à grain.

8. Moissonneuse-batteuse selon l'une quelconque des revendications 1 à 7, dans laquelle le au moins un dispositif de capture d'image est placé sur un panneau d'extension de compartiment à grain (28), agencé au niveau de l'extrémité supérieure d'un compartiment à grain.

9. Moissonneuse-batteuse selon l'une quelconque des revendications 1 à 8, dans laquelle le au moins un dispositif de capture d'image comprend au moins l'un des dispositifs suivants : une caméra vidéo, un appareil-photo, une caméra 3D.

10. Moissonneuse-batteuse selon l'une quelconque des revendications 1 à 9, dans laquelle le contrôleur est agencé de manière à comparer le volume de grain calculé à un volume limite prédéfini et à produire un signal d'alerte si le volume calculé excède le volume limite prédéfini.

11. Moissonneuse-batteuse selon l'une quelconque des revendications 1 à 10, dans laquelle le contrôleur est agencé de manière à communiquer les données de volume calculées à un opérateur, de préférence, dans laquelle les données de volume calculées sont affichées sur un écran d'affichage.

12. Moissonneuse-batteuse selon l'une quelconque des revendications 1 à 11, dans laquelle la moissonneuse-batteuse comprend un dispositif de commande d'entraînement (14) comportant un module d'asservissement de couple, dans laquelle le module d'asservissement de couple du dispositif de commande d'entraînement est commandé sur la base des données de volume calculées.

13. Dispositif de contrôle de volume de grain agencé sous la forme d'un module destiné à être installé sur une moissonneuse-batteuse comportant un compartiment à grain, comprenant :
un dispositif de capture d'image destiné à capturer une image d'un tas de grain dans le compartiment à grain, et ;
un contrôleur destiné à être couplé au dispositif de capture d'image afin de recevoir ladite image capturée,
**caractérisé en ce que**
le contrôleur est agencé de manière à déterminer un angle de repos et la hauteur du tas de grain sur la base de l'image capturée et à calculer le volume du tas de grain sur la base de l'angle de repos et de la hauteur du tas de grain.
